# EUROPEAN PATENT APPLICATION

(11) **EP 3 364 562 A1**
(43) Date of publication of application: **22.08.2018**
(21) Application number: 17157253.0
(22) Date of filing: 21.02.2017
(51) Int. Cl.: H04B 10/077, G01M 11/00

(54) **SYSTEM AND METHOD FOR NON-INTRUSIVE DETECTION OF OPTICAL ENERGY LEAKAGE FROM OPTICAL FIBERS**

(71) Applicant: Fluke Corporation, Everett, WA 98203 (US)
(72) Inventor: SCHELL, J.D., Austin, TX 78717 (US); HITTEL, John P., Scottsdale, AZ 85254 (US); SALLING, Jackson, Austin, TX 78752 (US); KIM, Wonoh, John Creek, GA 30097 (US)
(74) Representative: Hargreaves, Timothy Edward

(57) **Abstract**

A system for detecting a location of optical energy leakage from optical fibers, including a portable imaging device for generating a visible image of one or more optical fibers within a field of view of the portable imaging device, an optical energy detector assembly associated with the portable imaging device and configured to detect a location of optical energy leakage from an optical fiber within the field of view of the portable imaging device, and a processor associated with the imaging device and the optical energy detector assembly for overlaying a computer generated representation of the detected location of optical energy leakage from an optical fiber within the field of view of the portable imaging device over a visible image of the plurality of optical fibers generated by the portable imaging device to create a composite image.

## Description

### BACKGROUND OF THE INVENTION

### 1. Field of the Invention

The subject invention is directed to a system and method for detecting optical energy leakage from optical fibers in a non-intrusive manner, and more particularly, to a system and method for overlaying a computer generated representation of a detected location of optical energy leakage from a fiber of interest over a video image of the fiber of interest to create a composite image for inspection by a user.

### 2. Description of Related Art

The identification of a particular fiber of interest located within a bundle of fibers can be a difficult and time consuming task for a technician. This need might arise if the technician needs to disconnect (for whatever reason) a particular fiber, but that fiber may not be labeled correctly or it is otherwise not easily identifiable. The subject invention will allow a user to readily identify a particular fiber of interest by injecting a particular signal at the far end of the fiber or by locating a fiber that is not active (or dark).

The existing art for locating a fiber of interest amongst a plurality of optical fibers often requires an intrusive detection method. One example involves clamping an optical energy detection tool onto each fiber. Another example uses a Near Infrared (NIR) sensor to find a fault location or optical energy leakage, as disclosed in U.S. Patent No. 7,826,043. This sensing device is typically used in situations where there is a single fiber or a large separation between fibers so that the leakage can be readily identified by pointing the sensor at the source of the leakage. If this were to be attempted in a situation where there were many optical fibers closely bundled together, a particular fiber of interest would be extremely difficult to find. Another prior art detection device that requires the NIR sensor to be in close proximity to a particular fiber of interest is disclosed in U.S. Patent No. 8,880,783.

Various types of portable electronic devices, such as smart phones, cell phones, personal digital assistants and tablet devices are in widespread use. These devices typically include a visible-light image sensor or camera that allows users to take a still picture or a video clip. One of the reasons for the increasing popularity of such embedded cameras may be the ubiquitous nature of mobile phones and other portable electronic devices. That is, because users may already be carrying mobile phones and other portable electronic devices, such embedded cameras are always at hand when users need one.

Image sensors used in these portable electronic devices are typically limited to capturing visible light images. They are not capable of capturing images of optical energy radiation emitted from optical fibers or the like, and thus cannot be used to produce images that can be beneficially used in the inspection of fiber optic systems and more specifically, to locate a fiber of interest. It would be beneficial therefore to enable a portable electronic device such as a smartphone to capture, process, display and store such images, so that they can be used to facilitate the location of a fiber of interest at low cost and in a non-intrusive manner.

### SUMMARY OF THE INVENTION

The subject invention is directed to a new and useful optical imaging system for detecting a location or position of optical energy leakage from one or more optical fibers in a low cost, non-intrusive manner. The invention enables a user to view a source of optical leakage with a portable video camera or other similar imaging device from a distance, without touching the optical fibers. The subject invention combines optical leakage detection devices with the imaging capability and functions of standard video imaging devices to create composite processed images for beneficial use.

The system includes a portable video imaging device for generating a still or video image of a plurality of optical fibers within a field of view, and a low-cost optical detector assembly operatively associated with the video imaging device and configured to detect the position or direction of optical energy leakage from one or more optical fiber of interest within the field of view of the video imaging device. By using a low-cost optical detector assembly, such as a photodiode array or the like, the subject invention provides advantages over prior art devices utilizing high-cost NIR detectors.

An image processor is operatively associated with the imaging device and the optical detector assembly for overlaying or otherwise combining a computer generated representation of the location of the detected optical energy leakage from one or more of the optical fibers with a video image generated by the video imaging device to create a composite or processed image, enabling the user to visibly detect the position of the optical energy leakage from a fiber of interest. In accordance with a preferred embodiment of the subject invention, the location or position of the optical energy leakage from a fiber of interest may be represented by a heat map or a similar graphical representation.

It is envisioned that the heat map representing the optical energy leakage may be used to indicate a general area in which the leakage is located with respect to one or more optical fibers, where the center of the heat map would indicate the most probable location of the optical energy leakage and the edges of the heat map would indicate less likely locations of the optical energy leakage. In this regard, the larger the uncertainty of the location of the optical energy leakage, the larger the heat map would be. It is envisioned that other graphics or text may be overlaid on the visual image together with the computer generated heat map, such as for example, a compass direction (N-S-E-W), and address or any other identifying information loaded from a database that can be obtained from QR codes or other similar machine readable codes.

The optical detector assembly may be integrated into the video imaging device, wirelessly coupled to the video imaging device, or mechanically coupled to the video imaging device. It is envisioned that the optical detector assembly can be portable and include a visible laser source for illuminating a fiber of interest to enable a linked smartphone device to highlight or otherwise augment a video image showing a location of optical energy leakage.

The optical detector assembly preferably includes an array of low-cost photodiodes. For example, the array of photodiodes may include four spaced apart photodiodes arranged in a rectangular pattern. Preferably, an optical element or lens is associated with each photodiode in the array to control the field of view of that photodiode. The optical elements may be configured to actively or manually control the field of view, or the optical elements may be configured to statically control the field of view. Optical filters may also be associated with the optical detector assembly to reject or permit selected signals.

The subject invention is also directed to a new and useful method of detecting the location of optical energy leakage from optical fibers in a low cost manner. The method includes the steps of providing a portable video imaging device for generating a video image of a plurality of optical fibers within a field of view, coupling a low cost optical detector to the video imaging device which is adapted and configured to detect the location or position of optical energy leakage from one or more fibers within the field of view of the imaging device, detecting a location or position of optical energy leakage from one or more optical fibers within the field of view, and overlaying a visual or graphical computer generated representation of the detected location or position of optical energy leakage over the video image generated by the video imaging device to create a composite image.

The method further includes mechanically coupling the optical detector to the video imaging device or wirelessly coupling the optical detector to the video imaging device. The method also includes locally storing the video image and the overlayed representation of the location of optical energy leakage on the video imaging device, and transferring the locally stored video image and overlayed representation from the video imaging device to a remote storage device.

The method can also include injecting a known optical energy signal into an end of a fiber of interest within the field of view to enable detection of such signal amongst other optical energy in that fiber, and controlling the field of view of the video imaging device. Furthermore, if it was desirable to locate multiple fibers of interest within a fiber bundle, a user could place an optical source at the far end (the known end) of each individual fiber, with each individual source sending a unique identification encoding signal optically, and then the user could detect each signal at the leakage location (the unknown end). Thereafter, each unique identifier could be overlayed upon the visible image of the fiber bundle generated by the video imaging device.

These and other features of the optical imaging system of the subject invention and the manner in which it is manufactured and employed will become more readily apparent to those having ordinary skill in the art from the following enabling description of the preferred embodiments of the subject invention taken in conjunction with the several drawings described below.

### BRIEF DESCRIPTION OF THE DRAWINGS

So that those skilled in the art to which the subject invention appertains will readily understand how to make and use the subject invention without undue experimentation, preferred embodiments thereof will be described in detail herein below with reference to certain figures, wherein:
Fig. 1 is an illustration of a portable imaging device constructed in accordance with a preferred embodiment of the subject invention, which is being used as intended to detect the location or position of optical energy leakage in a communication system in a low-cost, non-intrusive manner;
Fig. 2 is a perspective view of the portable imaging device the subject invention, which includes a smartphone or host device having an embedded visible light camera together with an optical imaging module having a low-cost optical imaging array;
Fig. 3 is a perspective view of a smartphone or host device used with the optical imaging module shown in Fig. 2;
Fig. 4 is the rear view of the host device shown in Fig. 3;
Fig. 5 is a front perspective view of the optical imaging module of the subject invention, with the host device removed for ease of illustration;
Fig. 6 is a rear perspective view of the optical imaging module of the subject invention, illustrating the low-cost optical sensor array;
Fig. 7 is an illustration of the portable imaging device of the subject invention, wherein a visible image of a fiber bundle is captured on the display of the host device by the embedded camera of the host device;
Fig. 8 is an illustration of the portable imaging device of the subject invention, wherein a computer generated representation of optical energy leakage from the fiber bundle is shown on the display of the host device after being detected by the low cost optical sensor array of the optical imaging module;
Fig. 9 is an illustration of the portable imaging device of the subject invention, wherein the representation of the location of the optical energy leakage from a fiber of interest is overlayed upon the visible image of the fiber bundle on the display of the host device to produce a composite image;
Fig. 10 is a process flow diagram for generating and subsequently handling a composite image produced by the portable imaging device of the subject invention;
Fig. 11 is an illustration of a hand-held illumination device that includes an optical detector and a visible laser for inspecting an optical fiber, wherein the device is networked via a wireless connection to a portable smartphone; and
Fig. 12 illustrates a portable smartphone, wherein the display provides an image of the optical fibers inspected by the illumination device in Fig. 11.

### DETAILED DESCRIPTION OF PREFERRED EMBODIMENTS

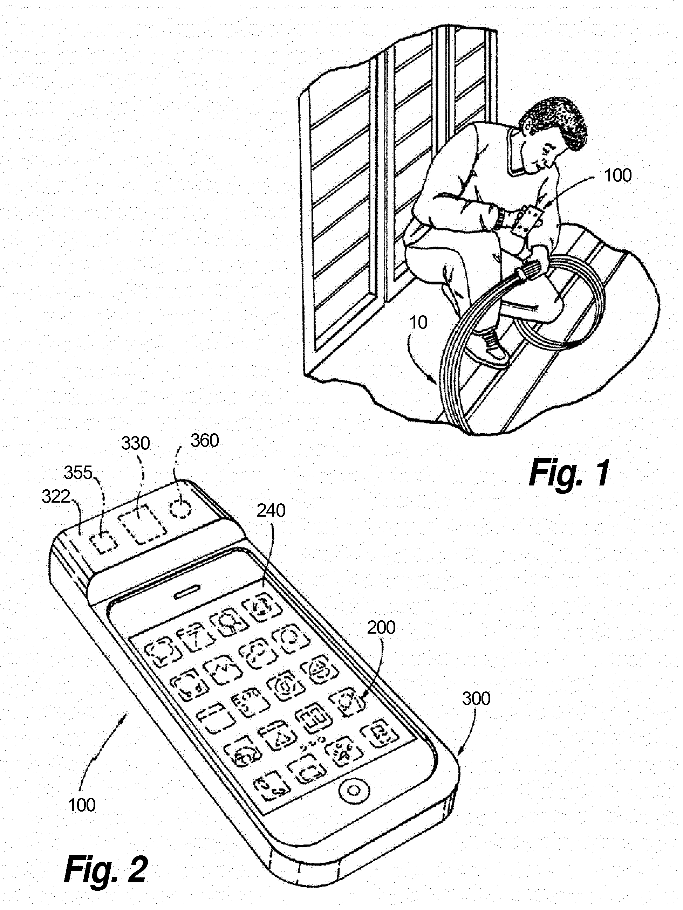

Referring now to the drawings, wherein like reference numerals identify similar structural features, there is illustrated in Fig. 1 a portable optical imaging assembly 100 constructed in accordance with a preferred embodiment of the subject invention, which is being used as intended to facilitate the non-intrusive inspection of an optical fiber bundle 10 in an effort to detect the precise location of a potential or actual fault or leak in a particular optical fiber that is not readily apparent upon visual inspection.

Referring to Fig. 2, the portable optical imaging assembly 100 includes a portable host device 200 and an optical imaging module 300 for cooperating with the portable user device 200. The portable host device 200 includes, among other components and features described below, an embedded camera for capturing a visible light image of a fiber of interest. The optical imaging module 300 includes, among other components and features described below, an optical sensor assembly for capturing a non-visible light image of optical energy emanating or otherwise leaking from an optical fiber under inspection. Moreover, the optical imaging module 300 is adapted to detect the position or direction of optical energy leakage relative to a visual image of a fiber bundle, so as to identify one or more fibers of interest within the fiber bundle.

In accordance with a preferred embodiment of the subject invention, the portable host device 200 is a mobile telephone, a personal digital assistant, a tablet device or any other appropriate mobile personal electronic device. For example, the host device 200 may be a smart phone (e.g., iPhone™ devices from Apple, Inc., Blackberry™ devices from Research in Motion, Ltd., Android™ phones from various manufacturers, or other similar mobile devices), a cell phone with processing capability, a tablet based device (e.g., iPad™ devices from Apple, Inc.) or a personal digital assistant (PDA) device.

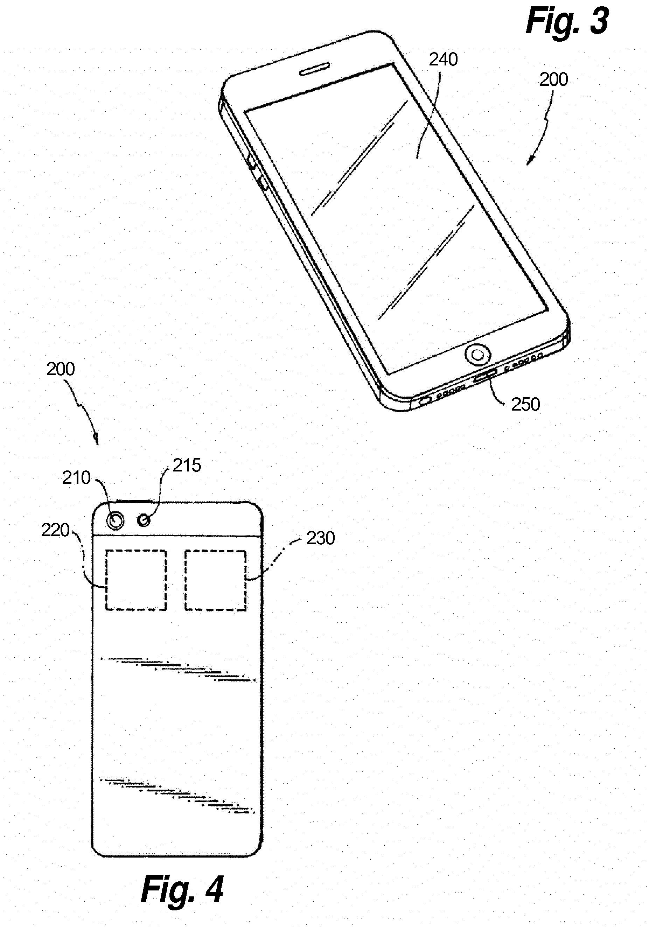

Referring to Figs. 3 and 4, in addition to an embedded camera 210, the host device 200 preferably includes an associated light source 215 located adjacent to the camera 210 on the rear surface of the device 200. It is envisioned however, that if the host device 200 does not include an embedded light source 215, the light source could be provided on the optical imaging module 300.

The host device 200 further includes an embedded processor 220 for processing images and data, and a memory 230 for storing images and data. The host device 200 also includes a graphical display 240 for displaying captured and/or processed images and/or other images, data and information. The host device 200 further includes a socket 250 adapted and configured to cooperatively connect with the optical imaging module 300, as described in more detail below.

The processor 220 of host device 200 may be implemented as any appropriate processing device (e.g., logic device, microcontroller, processor, application specific integrated circuit (ASIC), or other device) that may be used to execute appropriate instructions, such as software instructions provided in memory 230 for smartphone applications. The visible light imaging embedded camera 210 of host device 200 may be implemented with a charge-coupled device (CCD) sensor, an electron multiplying CCD (EMCCD) sensor, a complementary metal-oxide-semiconductor (CMOS) sensor, a scientific CMOS (sCMOS) sensor, an intensified charge-coupled device (ICCD), or other suitable visible light imaging sensors.

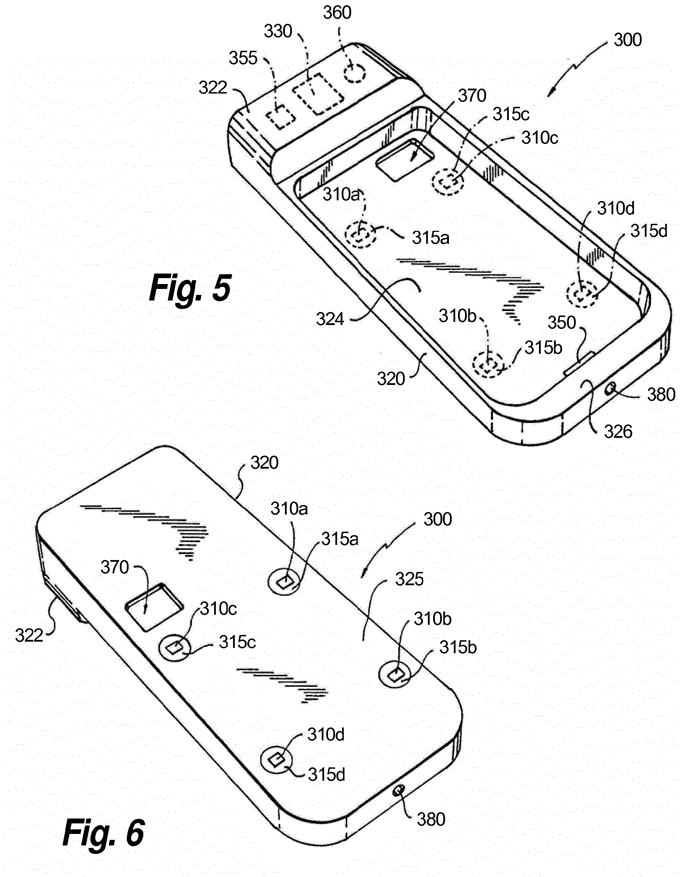

Referring to Figs. 5 and 6, the optical imaging module 300 is configured to detect the location or position optical energy leakage, process, and/or otherwise generate and manage graphical representations (e.g., heat maps) of the position or location of such optical energy leakage and provide such representations to host device 200 for use in any desired fashion (e.g., for further processing, to store in memory, to display, to use by various applications running on host device 200, to export to other devices, or other uses). Preferably, the optical imaging module 300 is configured to operate at low voltage levels and over a wide temperature range.

The optical imaging module 300 includes a housing 320 that is adapted and configured for releasably attaching to the host device 200, as shown in Fig. 2. The housing 320 includes an upper body portion 322 for accommodating a number of embedded electronic components described below. The housing 320 further includes a central recessed area or cradle 324 shaped to receive or otherwise accommodate and frictionally retain the rear surface of the host device 200. The housing 320 also includes a lower body portion 326 for accommodating an engagement plug 350 that detachably engages the socket 250 of host device 200.

The housing 320 of module 300 further includes a window or camera cutout 370 for enabling use of the visible light imaging camera 210 of host device 200. It is envisioned that other cutouts or replicated features may be included to accommodate various buttons, switches, connectors, speakers, and microphones that may be obstructed by the housing 320 when the host device 200 is attached. The location, the number, and the type of replicated components and/or cutouts may be specific to host device 200.

The upper body portion 322 of module housing 320 supports a number of embedded internal components including an energy leakage location profile generator 330 for generating a graphical representation (e.g., a heat map) or the like representing the location or position of detected optical energy leakage, a wireless communication device 355 and a battery 360.

The rear wall 325 of housing 320 supports the optical sensor assembly 310 which includes an array of four optical sensors 310a-310d. As shown, the four optical sensors 310a-310d are spatially separated from one another in a rectangular pattern. However, it is envisioned that the number and relative geometric arrangement of the optical sensors 310a-310d can vary depending upon the application.

Preferably, the optical sensors 310a-310d utilized in module 300 are relatively inexpensive optical energy detectors or photodiodes that are particularly well suited to detect and pinpoint the precise location or position of optical energy leakage relative to a fiber of interest within an optical fiber bundle or group of fibers. In this regard, low cost optical detectors or photodiodes for positon detection are well known in the art.

For example, each optical sensor in the array 310 may take the form of a tetra-lateral position sensing detector made with a single resistive layer for either one or two dimensional measurements. These photodiodes feature a common anode and two cathodes for one dimensional position sensing or four diodes for two dimensional position sensing. For instance, OSI Optoelectronics of Hawthorne, CA manufactures suitable tetra-lateral position sensing detectors under the model designation SC-25D and SC-50D.

It is also envisioned that the optical imaging module 300 could be provided with a low cost quadrant photo diode array, sometimes referred to as a quad detector to detect the direction of energy leakage and thus the relative position of the leakage with respect to the detector array. By way of example, OSI Optoelectronics of Hawthorne, CA manufactures a suitable quad detector array under the model designations QD7-0-SD or QD50-SD.

In such a device, as more or less energy is incident upon each quadrant element of the detector, more or less current is generated in proportional response to position. This is accomplished using circuitry that provides two difference signals and a sum signal. The two difference signals are voltage analogs of the relative intensity difference of light sensed by opposing pairs of the photodiode quadrant elements. In addition, the amplified sum of all four quadrant elements is provided as a sum signal. Quad detectors are typically employed for small diameter beams of light, such as laser beams. As a result, they may not be optimal for this particular application.

Referring once again to Figs. 5 and 6, the individual optical detectors or photodiodes 310a-310d of sensor array 310 preferably include respective optical elements or lenses 315a-315d, which define a focal aperture for controlling the energy or radiation that reaches each sensor in the sensor array 310. Limiting the field of view of each photodiode 310a-310d in the array 310 allows a unique amount of light to reach each photodiode depending upon its relative position to the optical energy leakage being detected.

If the imaging device 100 is pointed directly at the detected optical energy by a user, then all of the photodiodes 310a-310d in the array 310 receive an equal amount of light and the detected energy leakage is centered on the video display 240 of the host device 200. As the device 100 is turned away from the detected light, for example to the right, then more light enters the photodiodes further to the left side of the module 300 (i.e., 310a and 310b) and less light enters the photodiodes further to the right side of the module 300 (i.e., 310c and 310d). Nevertheless, a graphical representation or profile of the location or portion of the optical energy leakage will be centered on the video display 240 of host device 200.

It is envisioned that the optical elements or lens apertures 315a-315d can be configured to actively control the field of view of the sensor array 310, by way of an app stored in memory 230 of host device 200, or manually by a button controlled feature of the module 300 or the host device 200. In doing so, the user is able to actively or manually vary the size and/or focal length of the apertures to control the field of view of the array 310. Alternatively, the optical elements or lens 315a-315d associated with each photodetector in the array 310 may be configured to statically control the field of view.

The lens assemblies 315a-315d each comprise a lens made from appropriate materials (e.g., polymers or infrared transmitting materials such as silicon, germanium, zinc selenide, or chalcogenide glasses) configured to pass certain wavelengths of energy through to the sensors 310a-310d. The lens assemblies may comprise optical elements, such as, for example, transmissive prisms, reflective mirrors or filters, as desired for various applications.

It is envisioned that each lens assembly 315a-315d can include one or more filters adapted to pass NIR radiation of certain wavelengths but substantially block off others (e.g., short-wave infrared (SWIR) filters, mid-wave infrared (MWIR) filters, long-wave infrared (LWIR) filters, and narrow-band filters). Such filters are utilized to tailor the optical sensor array 310 for increased sensitivity to a desired band of wavelengths.

It is also envisioned that the photodiodes 310a-310d may be capable of detecting the location or position of high speed signals with respect to a fiber of interest. Thus, if a known signal is injected at one end of an optical fiber, the sensor array 310 may be programmed to detect that known signal and distinguish it from other optical energy, including the communication data signal being carried by other fibers, so as to identify a particular fiber of interest.

It is further envisioned that the optical imaging module 300 can be utilized to locate multiple fibers of interest within a fiber bundle. That is, a user could place an optical source at the far end (the known end) of each individual fiber in a bundle, with each individual source sending a unique identification encoding signal optically. Thereafter, the user could detect each signal at the leakage location (the unknown end). Each unique identifier could then be overlayed upon the visible image of the fiber bundle generated by the video imaging device 200 to form a composite image.

In addition, it is envisioned and well within the scope of the subject disclosure, that signaling methods and detection methods may be utilized to increase the signal to noise ratio. These methods may include lock-in amplifiers and/or code correlation methods known in the art.

The leakage location generator 330 of module 300 performs appropriate graphical processing of the detected location of optical energy leakage from a fiber of interest and may be implemented in accordance with any appropriate architecture. For example, the generator 330 may be implemented as an ASIC. In this regard, such an ASIC may be configured to perform processing with high performance and/or high efficiency. Alternatively, generator 330 may be implemented with a general purpose central processing unit (CPU) which may be configured to execute appropriate software instructions to perform graphical processing, coordinate and perform graphical processing with various graphical processing blocks, coordinate interfacing between the generator 330 and the host device 200, and/or other operations. The leakage location generator 330 may be implemented with other types of processing and/or logic circuits in other embodiments as would be understood by those skilled in the art.

The leakage location generator 330 may also be implemented with other components where appropriate, such as, volatile memory, non-volatile memory, and/or one or more interfaces (e.g., light detector interfaces, inter-integrated circuit (I2C) interfaces, mobile industry processor interfaces (MIPI), joint test action group (HAG) interfaces (e.g., IEEE 1149.1 standard test access port and boundary-scan architecture), and/or other interfaces).

It is envisioned that battery 360 could be a rechargeable battery using a suitable technology (e.g., nickel cadmium (NiCd), nickel metal hydride (NiMH), lithium ion (Li-ion), or lithium ion polymer (LiPo) rechargeable batteries). In this regard, module 300 would include a power socket 380 for connecting to and receiving electrical power from an external power source (e.g., AC power outlet, DC power adapter, or other similar appropriate power sources) to charge battery 340 and/or powering internal components of module 300.

It is also envisioned that module 300 could accept standard size batteries that are widely available and can be obtained conveniently when batteries run out, so that users can keep using module 300 and the host device 200 by simply installing standard batteries. In such an instance, the lower body portion 326 of the housing 320 includes a hinged cover to remove and install batteries.

The leakage location generator 330 is connected to the photodiodes of the sensor array 310 in a variety of different ways. For example, the sensor array 310 and leakage location generator 330 may be electrically coupled to each other within housing 320 or they may be communicatively connected in a multi-chip module (MCM) or on small-scale printed circuit boards (PCBs) communicating with each other via PCB traces or a bus.

The leakage location generator 330 may be configured to perform appropriate processing of detected optical energy leakage location data, and transmit raw and/or processed data to user device 200. For example, when module 300 is attached to host device 200, the location generator 330 may transmit raw and/or processed leakage location data to host device 200 by way of a hard wired device connector 350 or wirelessly through wireless components 355.

Host device 200 may be configured to run appropriate software instructions (e.g., a smart phone software application, commonly referred to as an "app") that permits users to frame and take still images, videos or both. Module 300 and host device 200 may be configured to perform other functionalities, such as storing and/or analyzing optical energy characteristics or contained within leakage location data.

Leakage location generator 330 may be configured to transmit raw and/or processed leakage location data to host device 200 in response to a request transmitted from the host device 200. For example, an app or other software/hardware routines implemented or running on the host device 200 may be configured to request transmission of leakage location data when the app is launched and ready to display user-viewable images on display 240 for users to frame and take still or video shots of a grouping of optical fibers. Leakage location generator 330 may initiate transmission of leakage location data captured by sensor assembly 310 when the request from the app on the host device 200 is received via a wired connection or a wireless connection.

As described above, module 300 includes a device connector 350 that carries various signals and electrical power to and from host device 200 when attached. The device connector 350 may be implemented according to the connector specification associated with the type of host device 200. For example, the device connector 350 of module 300 may implement a proprietary connector (e.g., an Apple™ dock connector for iPhone™ such as a "Lightning" connector, a 30-pin connector or others) or a standardized connector (e.g., various versions of Universal Serial Bus (USB) connectors, Portable Digital Media Interface (PDMI), or other standard connectors as provided in user devices).

As discussed above, module 300 can communicate with the host device 200 by way of a wireless connection. In this regard, module 300 includes a wireless communication element 355 configured to facilitate wireless communication between host device 200 and the leakage location generator 330 or other components of module 300. In various embodiments, wireless communication 355 may support the IEEE 802.11. WiFi standards, the Bluetooth™ standard, the ZigBee™ standard, or other appropriate short range wireless communication standards. Thus, module 300 may be used with host device 200 without relying on the device connector 350, if a connection through the device connector is not available or not desired.

In some embodiments, wireless communication element 355 in housing 320 may be configured to manage wireless communication between the leakage location generator 330 and other external devices, such as a desktop computer, thus allowing module 300 to be used as an imaging accessory for an external device as well.

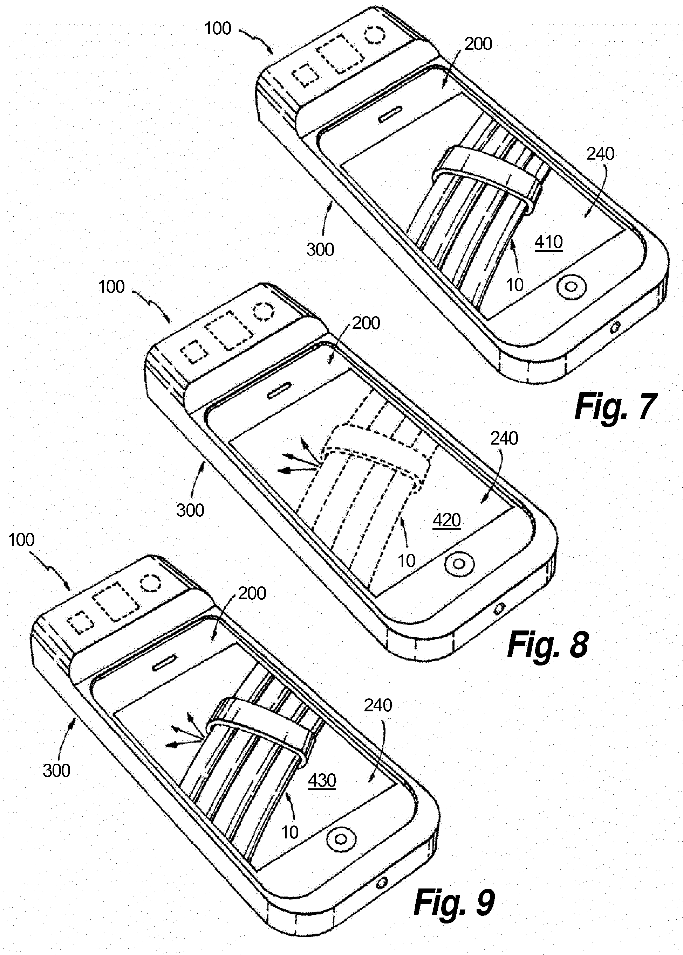

Referring now Figs. 7 through 9, in use the portable imaging device 100 of the subject invention is deployed in the manner illustrated in Fig. 1, to inspect a group or bundle of particular optical fibers 10 of a communication network in an effort to detect the precise location of a potential or actual fault or leak in a particular optical fiber that is not readily apparent upon visual inspection. In Fig. 7, a visible image 410 of the optical fiber bundle 10 is captured on the display 240 of the host device 200 by the embedded camera 210 of the host device 200.

In Fig. 8, a graphical representation 420 of the optical energy leakage emanating from one fiber in the bundle 10 is captured on the display 240 of host device 200 by the optical sensor array 310 of the optical imaging module 300. As discussed above, the graphical representation may be in the form of a heat map indicating the probable location or position of the optical energy leakage. The graphical representation of the location of the optical energy leakage 420 detected by the sensor array 310 in Fig. 8 is overlayed upon the visible image of the fiber bundle 410 captured by the camera 210 in Fig. 7 to produce or otherwise generate a processed or composite image 430, which is shown on display 240 of host device 200 in Fig. 9.

In accordance with a preferred embodiment of the subject invention, the leakage location generator 330 may fuse, superimpose, or otherwise combine the visible light image 410 obtained or captured from camera 210 of host unit 200 (Fig. 7) with the graphical representation 420 of the leakage location obtained by optical sensor assembly 310 of module 300 (Fig. 8) to form the processed composite image 430 (Fig. 9). The processed image 430 may be provided to the display 240 of host device 200, as shown in Fig. 9, and/or stored in memory 230 of device 200 or the memory of module 300, or transmitted to external equipment or the cloud by way of wireless component 355 of module 300.

The composite video or still image 430 that is generated by the leakage location generator 330 of module 300 may be digitally stored locally in the memory 230 of the host device 200 or in memory of the module 300. These image records may be transferred to a computer and/or a cloud service by wired and/or wireless data transfer. These records may be used to create documentation and reports of the before and after results of the inspection, if any remediation was performed to the fibers. The records may be used to document as built condition of the fibers. The records may be used to augment workflow efficiencies made through real-time updates by way of cloud enabled reporting or with the host device 200.

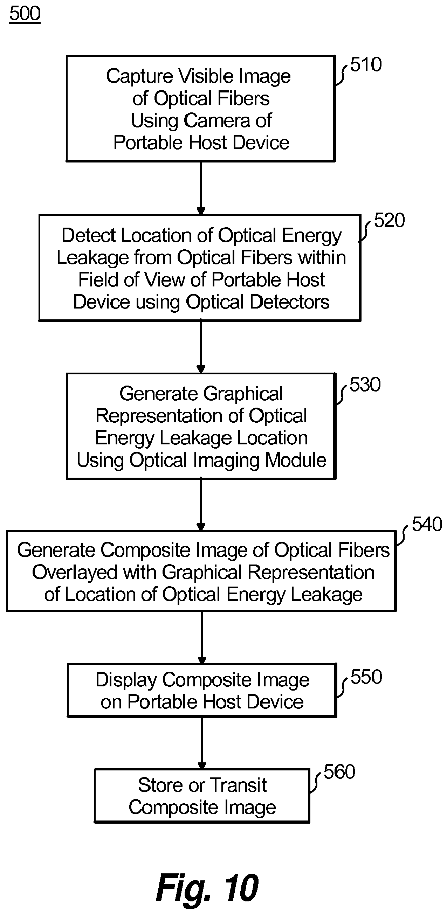

Referring now to Fig. 10 in conjunction with Figs. 7 through 9, there is illustrated a process 500 for capturing, generation and combining visible light images of fibers and graphical representations of locations of optical energy leakage from one or more of such fiber using the optical imaging assembly 100 of the subject invention, which includes the host device 200 and the optical imaging module 300.

Initially, at step 510 a visible light image of optical fibers is captured by the embedded camera 210 of the portable host device 200, as shown in Fig. 7. Then, at step 520 the sensor array 310 of module 300 is employed to detect the location or position of optical energy leakage relative to an optical fiber of interest within the field of view of the host device 200. At step 530, the leakage location generator 330 of module 300 is employed to create or otherwise generate a graphical representation of the location of optical energy leakage detected at step 520, as shown in Fig. 8. Alternatively, a heat map may be generated by the leakage location generator 330 at step 530. At step 540, the visible light image captured at step 510 and the representation of the location of the optical energy leakage detected at step 520 and graphically generated at step 530 are processed by the leakage location generator 330 of module 300.

In this regard, the visible light image and the computer generated graphical image can undergo individual processing operations and/or processing operations for combining, fusing, or superimposing the two images. Processing the images may include parallax corrections based on the distance between the camera 210 and optical sensor array 310. The visible and graphical images or representations may be processed using a processor in the device and/or using a processor in the module to form processed (e.g., combined, fused, or superimpose) images.

At step 540 the composite image is presented on the display 240 of host device 200, as shown in Fig. 9. Thereafter, at step 560 a suitable action may be taken by the user of the device 100 with respect to the processed or fused images 430 generated at step 540. Suitable action may include, in addition to displaying the processed images, storing the processed images (e.g., on the host device 200 and/or on the module 300), and/or transmitting the processed images (e.g., between the host device 200 and the module 300 or to external equipment).

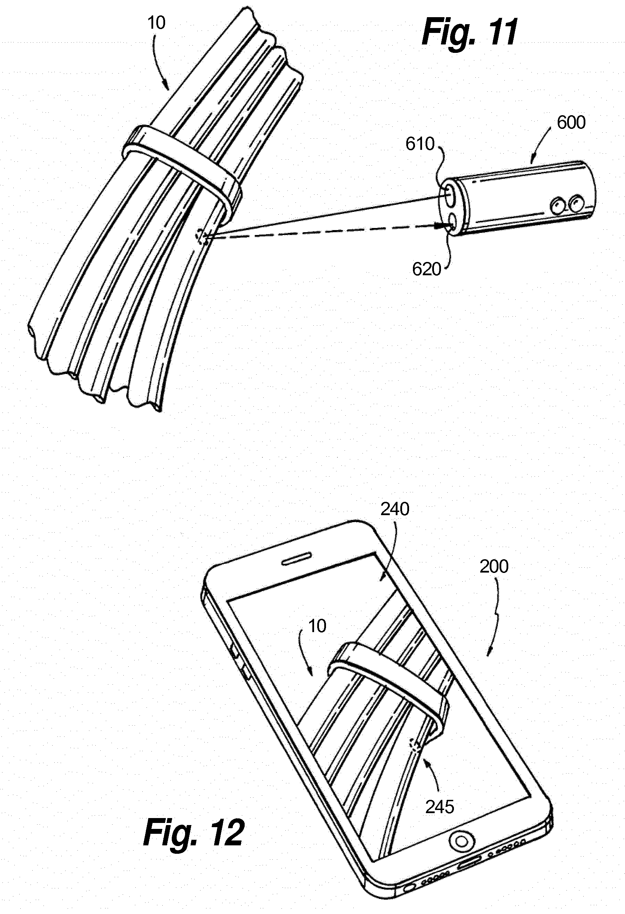

Referring now to Figs. 11 and 12, there is illustrated another embodiment of the subject invention wherein a hand-held illumination device 600 is employed in conjunction with a portable smartphone 200 to conduct the non-intrusive inspection of an optical fiber bundle 10 in a communication network to detect potential or actual optical energy leakage from one or more of the fibers in bundle 10. The illumination device 600 includes a visible laser element 610 and an adjacent optical sensor element 620 in the form of a single or small focal plane array (FPA) sensor. This is similar to the fault detector disclosed in U.S. Patent No. 8,810,783, which is incorporated herein by reference in its entirety.

In use, the visible laser element 610 of device 600 is used to illuminate the location of the fiber in bundle 10 that is "sniffed" by the sensor element 620. The device 600 is linked to the smartphone 200 via a wireless communication link such as Bluetooth, WiFi or similar means. The still or video image of the optical fiber bundle 10 captured by the embedded camera 210 and shown on the display 240 of smartphone 200 may be augmented or highlighted using graphics 245 or indicia generated by appropriate software. This shows the location(s) on the optical fiber bundle 10 that has been illuminated by the visible laser element 610, if that location(s) is found to have optical energy leakage as determined by the sensor element 620 and communicated to the smartphone device 200.

While the subject invention has been shown and described with reference to preferred embodiments, those skilled in the art will readily appreciate that various changes and/or modifications may be made thereto without departing from the spirit and scope of the subject invention as defined by the appended claims. For example, it is envisioned that the optical imaging features of the subject invention can be fully integrated by hardware and software application into a smartphone device. That is, the components of the optical imaging module can be fully integrated into a portable personal electronic device.

## Claims

1. A system for detecting a location of optical energy leakage from optical fibers, comprising:
a) a portable imaging device for generating a visible image of one or more optical fibers within a field of view of the portable imaging device;
b) an optical energy detector assembly operatively associated with the portable imaging device and configured to detect a location of optical energy leakage from one or more of the optical fibers within the field of view of the portable imaging device; and
c) a processor operatively associated with the imaging device and the optical energy detector assembly for overlaying a computer generated representation of the detected location of optical energy leakage from one or more of the optical fibers within the field of view of the portable imaging device over a visible image of the plurality of optical fibers generated by the portable imaging device to create a composite image identifying at least one fiber of interest.

2. A system as recited in Claim 1, wherein the optical energy detector assembly is integrated with the portable imaging device.

3. A system as recited in Claim 1, wherein the optical energy detector assembly is wirelessly coupled to the portable imaging device.

4. A system as recited in Claim 1, wherein the optical energy detector assembly is mechanically coupled to the portable imaging device.

5. A system as recited in Claim 1, wherein the portable imaging device is selected from the group consisting of a portable smartphone device, a portable tablet device and a portable personal digital assistant.

6. A system as recited in Claim 1, wherein at least one of a) or b):
a) the optical energy detector assembly includes a visible laser source for illuminating the fiber of interest;
b) the optical energy detector assembly includes at least one quadrant photodiode array.

7. A system as recited in Claim 1, wherein optical energy detector assembly includes a plurality of spaced apart individual photodiodes, and
optionally:
an optical element is associated with each photodiode in the array to control the field of view of that photodiode.

8. A system as recited in Claim 7, wherein the optical elements are configured to actively control the field of view.

9. A system as recited in Claim 7, wherein the optical elements are configured to manually control the field of view.

10. A system as recited in Claim 7, wherein the optical elements are configured to statically control the field of view.

11. A system as recited in Claim 1, wherein optical filters are associated with the optical energy detector assembly to reject selected signals.

12. A method of detecting a location of optical energy leakage from optical fibers, comprising:
a) generating a visible image of a plurality of optical fibers within a field of view of a portable imaging device;
b) detecting a location of optical energy leakage from one or more optical fibers within the field of view of the portable imaging device;
c) generating a graphical representation of the detected location of optical energy leakage; and
d) combining the graphical representation of the detected location of optical energy leakage with the visible image of the plurality of optical fibers generated by the portable imaging device to create a composite image; and
e) displaying the composite image on the portable imaging device.

13. A method according to Claim 12, further comprising providing a portable imaging device for generating a visible image of a plurality of optical fibers within a field of view of the portable imaging device.

14. A method according to Claim 13, further comprising mechanically coupling an optical energy detector to the portable imaging device to detect a location of optical energy leakage from one or more fibers within the field of view of the portable imaging device, wherein
optionally:
the method further comprises wirelessly coupling an optical energy detector to the portable imaging device to detect a location of optical energy leakage from one or more fibers within the field of view of the portable imaging device.

15. A method according to Claim 12, further comprising at least one of a), b) and c):
a) locally storing the composite image on the video imaging device;
b) transferring the composite image from the video imaging device to a remote storage device;
c) controlling the field of view of the video imaging device.
